# FASCICULE DE BREVET EUROPEEN

(11) **EP 1 361 129 B1**
(45) Date de publication et mention de la délivrance du brevet: **28.05.2008**
(21) Numéro de dépôt: 03009590.5
(22) Date de dépôt: 29.04.2003
(51) Int. Cl.: B60T 13/575, B60T 13/569, B60T 13/565

(54) **Dispositif de fusible pour servomoteur pneumatique d'assistance au freinage**
Mechanische Sicherung für einen pneumatischen Bremskraftverstärker
Mechanical fuse for a pneumatic brake booster

(30) Priorité: 07.05.2002 FR 0205771
(43) Date de publication de la demande: 12.11.2003
(73) Titulaire: ROBERT BOSCH GMBH, 70442 Stuttgart (DE)
(72) Inventeur: Castello, Olivier, 93140 Bondy (FR); Richard, Philippe, 77500 Chelles (FR)
(74) Mandataire: Hurwic, Aleksander Wiktor

(56) Documents cités:
- FR-A- 2 816 569
- US-A- 4 354 353
- US-A- 5 469 761
- US-A- 5 493 948

## Description

La présente invention concerne un fusible de la tige de poussée d'un servomoteur pneumatique d'assistance au freinage, son procédé de montage et le servomoteur pneumatique d'assistance au freinage comprenant un tel fusible.

On connaît des installations de freinage pneumatique comportant un servomoteur pneumatique d'assistance au freinage. Un tel servomoteur pneumatique est décrit par exemple dans les documents FR-A-2 744 085 de la demanderesse. Il comprend une coquille avant et une coquille arrière formant ensemble une enveloppe rigide. Une cloison mobile sépare de façon étanche l'intérieur de cette enveloppe rigide et y délimite une chambre avant et une chambre arrière. Au repos, la chambre avant est reliée à une source de dépression qui délivre une pression basse Pd par rapport à la pression atmosphérique Pa. Au repos, la chambre arrière est en communication avec la chambre avant. Un piston pneumatique se déplace avec la cloison mobile. Le servomoteur est commandé par une tige de commande mobile entre une position de repos et une position d'actionnement. Lorsqu'on exerce une force sur la tige de commande par la pédale de frein, cette force supérieure à la force de rappel d'un ressort provoque la fermeture de la communication entre les chambres avant et arrière, la communication de la chambre arrière avec un environnement à pression atmosphérique et repousse la cloison mobile vers l'avant et engendre une force d'assistance utilisée pour actionner un maître-cylindre.

Le servomoteur comporte également un disque de réaction disposé en avant d'un plongeur commandé par la tige de commande et reçu dans un logement porté par une extrémité d'une tige de poussée transmettant l'effort d'assistance à un piston d'un maître-cylindre. Le disque de réaction est en matériaux sensiblement incompressibles composant un effort de commande appliqué par le plongeur, un effort d'assistance appliqué par le piston pneumatique et un effort de réaction provenant du maître-cylindre et transmis par la tige de poussée, et permettant au conducteur de ressentir à la pédale de frein la réaction du circuit de freinage et ainsi d'adapter celui-ci.

Le document US 5469761 A montre un plongeur comprenant un disque de réaction pour un servomoteur pneumatique.

Dans ces installations pneumatiques montées sur des automobiles, la tige de commande actionnée par la pédale de frein est reliée au maître-cylindre. Lors d'un choc frontal de l'automobile avec un obstacle, on a pu mettre en évidence que l'ensemble moteur, batterie se trouvant dans le compartiment moteur est poussé contre la cloison de séparation entre le compartiment moteur et l'habitacle, et la poussée subie par l'ensemble moteur se répercute sur le servomoteur pneumatique d'assistance au freinage, donc sur le maître-cylindre et sur l'ensemble du servomoteur pneumatique d'assistance au freinage. Comme il existe une liaison entre le pied du conducteur reposant sur la pédale de frein et l'extrémité du maître cylindre, la poussée vers l'arrière due au choc se répercute sur le pied du conducteur qui subit un choc.

L'invention a donc pour but de supprimer le choc subi par le pied du conducteur lors d'un choc entre l'automobile et un obstacle.

Il est connu que pour supprimer ce choc, il est nécessaire, pour éviter le retour de la pédale, de couper une partie de la chaîne cinématique entre la pédale de frein reliée à la tige de commande du servomoteur pneumatique d'assistance au freinage et le maître-cylindre. A cet effet, on a prévu un dispositif fusible dans le servomoteur pneumatique d'assistance au freinage qui supprime la liaison cinématique entre la pédale de frein et le maître-cylindre. Ce dispositif de fusible est constitué par une bague qui maintient la face d'extrémité de la tige de poussée du piston et le logement du disque de réaction. Cette bague est maintenue par compression sur la tige de poussée et le logement ou par sertissage sur la périphérie de la tige de poussée et d'une extrémité du logement. Elle est donc extérieure à la tige du piston primaire. Un inconvénient d'un tel système est donc son encombrement axial. Lors d'un choc suffisant, la bague se déforme sous l'action d'un couple suffisant et libère les deux pièces.

Un autre but de l'invention est donc de supprimer l'encombrement radial du dispositif de fusible connu.

Encore un autre but de l'invention est de supprimer la bague et donc de réduire le nombre de pièces constituant le servomoteur pneumatique d'assistance au freinage.

Un autre but est de diminuer le coût du servomoteur pneumatique d'assistance au freinage, ce coût étant diminué par la suppression d'une pièce et par la simplification du montage.

A cet effet, l'invention concerne un dispositif de fusible pour servomoteur pneumatique d'assistance au freinage, caractérisé en ce qu'il comprend une première partie cylindrique creuse dont une extrémité est de diamètre interne d1 et une seconde partie en forme de coupelle à fond circulaire muni sur sa partie externe centrale d'un téton sensiblement cylindrique de diamètre externe d2 légèrement supérieur, aux tolérances près, au diamètre interne d1 de ladite extrémité de ladite première partie cylindrique creuse, pour permettre la solidarisation de ladite première partie cylindrique creuse avec ladite seconde partie en forme de coupelle par emboîtement à force dudit téton dans ladite extrémité creuse de diamètre d1 inférieur, ladite seconde partie en forme de coupelle comportant une gorge externe circulaire dont la fonction est de fragiliser la liaison entre ledit téton et ledit fond de ladite seconde partie en forme de coupelle, lorsqu'un couple de forces est appliqué sur ledit dispositif de fusible, pour permettre la désolidarisation de ladite première partie cylindrique creuse de ladite seconde partie en forme de coupelle.

Le dispositif de fusible pour servomoteur est encore tel que ladite première partie cylindrique creuse est destinée à constituer la tige de poussée du servomoteur pneumatique d'assistance au freinage.

Ladite seconde partie en forme de coupelle est destinée à réceptionner un disque de réaction en élastomère placé au fond de la coupelle, le disque de réaction s'adaptant au corps de piston d'assistance du servomoteur.

L'invention concerne en outre un servomoteur pneumatique d'assistance au freinage comprenant : une enveloppe rigide, une cloison mobile définissant de façon étanche, une chambre avant et une chambre arrière à l'intérieur de l'enveloppe, la chambre avant étant en fonctionnement soumise à une première pression et la chambre arrière étant reliée sélectivement à la chambre avant ou soumise à une seconde pression supérieure à la première, un piston pneumatique se déplaçant avec la cloison mobile, une tige de commande axiale se déplaçant vers le piston en fonction d'une force d'entrée sélectivement exercée à l'encontre d'une force de rappel et orientée suivant une direction axiale d'actionnement pointant vers la chambre avant, la force de rappel sollicitant la tige de commande vers une position de retour et la force d'entrée sollicitant la tige de commande 8 vers une positionnement d'actionnement qui dépend de la force d'entrée, un clapet à trois voies reliant la chambre arrière à la chambre avant lorsque la tige de commande est en position de repos, et soumettant la chambre arrière à la seconde pression lorsqu'il est actionné par un déplacement de la tige de commande vers sa position d'actionnement, et une tige de poussée, caractérisé en ce qu'il comprend un dispositif de fusible défini ci-dessus.

L'invention sera mieux comprise à l'aide des dessins annexés dans lesquels :

La figure 1 est une vue en coupe d'un dispositif de servomoteur pneumatique d'assistance au freinage selon la technique antérieure.

La figure 2 est une vue agrandie schématique d'une liaison entre la tige du piston primaire et la pièce à laquelle il est relié, cette liaison étant effectuée par un fusible selon la technique antérieure.

La figure 3 est une vue en coupe transversale du fusible selon la présente invention.

La figure 4 est une vue en coupe transversale de la première partie en cuvette du fusible de la figure 3.

La figure 5 est une vue en coupe transversale de la seconde partie du fusible de la figure 3, complémentaire de la première partie en cuvette.

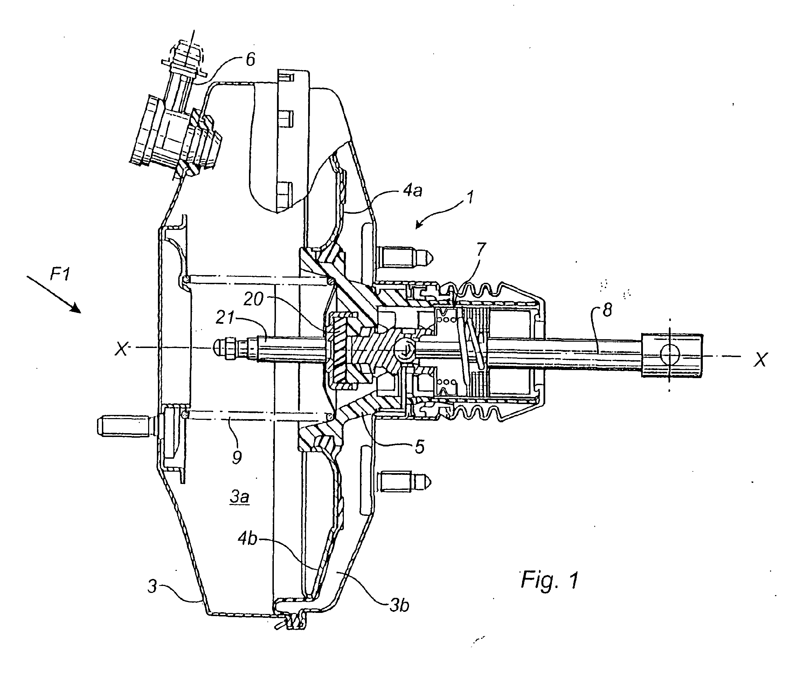

Sur la figure 1, on a représenté un dispositif de servomoteur pneumatique d'assistance au freinage 1 selon la technique antérieure.

Le servomoteur 1 comprend une enveloppe rigide 3 séparée, deux chambres 3a et 3b, de façon étanche, par une cloison mobile 4, constituée d'une membrane 4a et d'une jupe rigide 4b, susceptible d'entraîner un piston pneumatique 5 mobile à l'intérieur de l'enveloppe 3.

La chambre 3a, dont la face avant est fermée de façon étanche par un maître-cylindre (non représenté), est en permanence raccordée à une source de dépression à travers un raccord 6.

La pression dans la chambre arrière 3b est contrôlée par un clapet pneumatique 7, commandé par une tige de commande 8 qui est reliée à une pédale de frein (non représentée).

Lorsque la tige de commande 8 est en position de repos, c'est-à-dire tirée vers la droite, le clapet pneumatique 7 établit une communication entre les deux chambres 3a et 3b du servomoteur.

La chambre arrière 3b est alors soumise à la même dépression que la chambre avant 3a, le piston 5 est repoussé vers la droite, en position de repos, par un ressort 9.

L'actionnement de la tige de commande 8, vers la gauche, sous l'action de la pression exercée par le pied du conducteur, a pour effet de déplacer dans un premier temps le clapet pneumatique 7 de façon qu'il isole les chambres 3a et 3b l'une de l'autre, puis dans un deuxième temps, de déplacer le clapet pneumatique 7, de façon qu'il ouvre la chambre arrière 3b à la pression atmosphérique.

La différence de pression entre les deux chambres 3a et 3b alors ressentie par la membrane 4a exerce une poussée sur la cloison mobile 4 qui tend à déplacer vers la gauche et à lui permettre d'entraîner le piston d'assistance 5 qui se déplace à son tour en comprimant le ressort 9.

Un disque de réaction 20 en matériaux sensiblement incompressibles est disposé en avant d'un plongeur 25 porté par la tige de commande dans un logement 26 solidaire d'une tige de poussée actionnant un piston du maître-cylindre (non représenté).

L'effort de freinage exercé sur la tige de commande 8 et l'effort d'assistance au freinage résultant de la poussée de la cloison mobile 4, sont alors appliqués suivant la direction axiale X-X+ de la tige de commande 8 sur le disque de réaction 20 en direction du maître-cylindre 2, et se conjuguent pour constituer la force d'actionnement de celui-ci.

La force d'actionnement est appliquée sur le piston primaire du maître cylindre et en provoque le déplacement vers la gauche suivant la direction axiale X-X+, ce qui entraîne une élévation de la pression du liquide de freinage présent dans la chambre de travail du maître- cylindre, et un actionnement du frein relié à celle-ci.

La tige de poussée 21 étant adaptée au corps de piston d'assistance 5 et celui-ci étant solidaire de l'ensemble de servofrein qui lui même est fixé dans le compartiment moteur, si une force F est appliquée de gauche vers la droite sur la figure 1, la tige de poussée 21 est déplacée vers la droite, et de même la tige de commande 8 est déplacée vers la droite, ce qui a pour effet que le pied du conducteur reposant sur la pédale de frein solidaire de la tige de commande, subit lui aussi une forte poussée vers la droite. Le but de l'invention est donc d'éviter cette liaison mécanique entre le pied du conducteur et l'extrémité du maître cylindre. On souhaite également que ce but soit atteint d'une manière rapide et peu coûteuse.

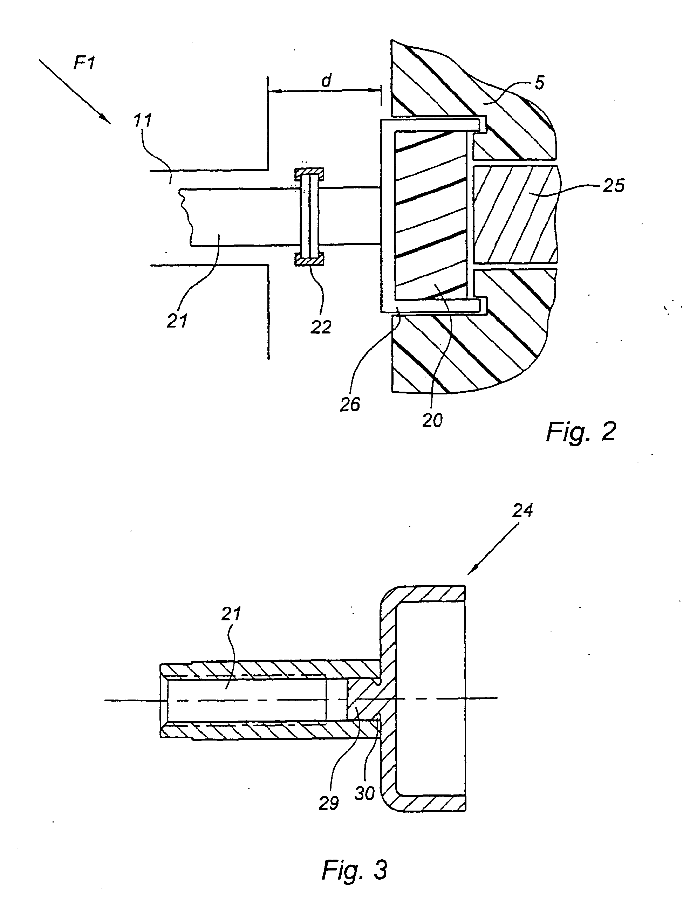

Sur la figure 2, on a représenté très schématiquement le moyen connu permettant de rompre la liaison entre le maître-cylindre et la tige de commande lors d'un choc avec un obstacle. La tige de poussée 21 est reliée par une bague 22 au logement 26 du disque de réaction 20. Cette bague 22 est placée extérieurement à la tige de poussée 21 et est fixée par un genre de sertissage sur celle-ci. Lors d'un choc, la force en direction de la flèche F1, la bague 22 se déforme et la tige de poussée 21 et le logement 26 du disque de réaction 20 sont désolidarisés et la distance axiale d entre le corps de piston 11 et le corps du piston d'assistance 23 est augmentée pour compenser le déplacement vers l'arrière de la tige de poussée 21.

On comprend que ce dispositif de la technique antérieure comporte plusieurs inconvénients. Un premier inconvénient est que la bague est une pièce rapportée qu'il est nécessaire de solidariser sur la tige de poussée 21 au moyen, par exemple, d'un genre de sertissage. On introduit donc une pièce supplémentaire dans le dispositif de servofrein, ce qui augmente le coût des pièces et le coût du montage. Un autre inconvénient est que la bague est disposée à l'extérieur de la tige de poussée 21 et donc qu'elle augmente l'encombrement axial.

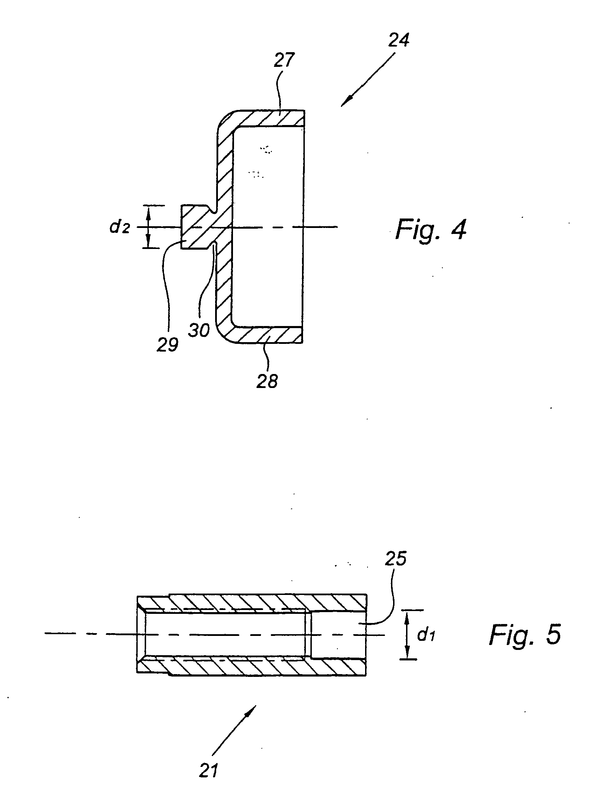

Sur les figures 3 à 5, on a représenté le dispositif fusible selon l'invention. Ce dispositif est constitué d'une première partie qui est la tige de poussée 21 qui vient coopérer avec une seconde partie 24 en forme de coupelle.

La tige de poussée 21 a une forme sensiblement tubulaire et comporte à une de ses extrémités un alésage 25 de diamètre interne d1.

La seconde partie 24 du dispositif fusible de la présente invention a une forme de coupelle comportant un fond 26 et des parois latérales 27, 28 sensiblement perpendiculaires au fond 26. Le fond 26 sensiblement circulaire comporte en son centre un téton externe 29. Le diamètre d2 du téton 29 est légèrement supérieur au diamètre interne d1 de l'alésage 25 de la tige de poussée 21. La coupelle est solidarisée avec la tige de poussée 21 par emboîtement à force du téton 29 de la coupelle 24 dans l'alésage 25 de la tige de poussée 21. La liaison mécanique entre la tige de poussée 21 et la coupelle 24 est réalisée par emmanchement serré entre ces deux pièces.

Le téton 29 est relié au fond 26 de la coupelle 24 par une gorge 30 circulaire. Cette gorge 30 a pour fonction de fragiliser la liaison entre le fond 26 de la coupelle et le téton 29. Par application d'un couple sur la coupelle 24, la gorge 30 est le siège d'une amorce de rupture et lorsque le couple appliqué est suffisant, le téton 29 se sépare du fond 26. La coupelle est alors désolidarisée de la tige de poussée 21.

La coupelle 24 est montée dans le dispositif de servofrein représenté sur la figure 1, et réceptionne un disque de réaction en élastomère placé au fond de la coupelle. Le disque de réaction s'adapte au corps de piston d'assistance du servomoteur.

Selon l'invention, on fournit donc un dispositif de fusible qui est constitué seulement de deux pièces et non de trois, comme dans la technique antérieure. Une économie de matière et de coût de montage est donc réalisée. En outre, la liaison est assurée par un emboîtement à force entre les deux pièces et le diamètre externe de la tige de poussée n'est pas augmenté. On supprime donc un encombrement axial, contrairement au dispositif de fusible selon la technique antérieure.

## Revendications

1. Dispositif de fusible pour servomoteur pneumatique d'assistance au freinage, **caractérisé en ce qu**'il comprend une première partie cylindrique creuse (21) dont une extrémité (25) est de diamètre interne (d1) et une seconde partie (24) en forme de coupelle à fond circulaire muni sur sa partie externe centrale d'un téton (29) sensiblement cylindrique de diamètre externe (d2) légèrement supérieur, aux tolérances près, au diamètre interne (d1) de ladite extrémité de ladite première partie cylindrique creuse (21), pour permettre la solidarisation de ladite première partie cylindrique creuse (21) avec ladite seconde partie en forme de coupelle (24) par emboîtement à force dudit téton (29) dans ladite extrémité creuse (25) de diamètre d1 inférieur, ladite seconde partie en forme de coupelle (24) comportant une gorge externe (30) circulaire dont la fonction est de fragiliser la liaison entre ledit téton (29) et ledit fond (26) de ladite seconde partie en forme de coupelle (24), lorsqu'un couple de forces est appliqué sur ledit dispositif de fusible, pour permettre la désolidarisation de ladite première partie cylindrique creuse de ladite seconde partie en forme de coupelle.

2. Dispositif de fusible pour servomoteur selon la revendication 1, **caractérisé en ce que** ladite première partie cylindrique creuse (21) est destinée à constituer la tige de poussée du servomoteur pneumatique d'assistance au freinage.

3. Dispositif de fusible pour servomoteur pneumatique d'assistance au freinage selon la revendication 1 ou 2, **caractérisé en ce que** ladite seconde partie en forme de coupelle (24) est destinée à réceptionner un disque de réaction en matériaux sensiblement incompressibles placé au fond de la coupelle, le disque de réaction s'adaptant au corps de piston d'assistance du servomoteur.

4. Servomoteur pneumatique d'assistance au freinage comprenant : une enveloppe rigide (3), une cloison mobile définissant de façon étanche, une chambre avant (3a) et une chambre arrière (3b) à l'intérieur de l'enveloppe (3), la chambre avant (3a) étant en fonctionnement soumise à une première pression et la chambre arrière (3b) étant reliée sélectivement à la chambre avant (3a) ou soumise à une seconde pression supérieure à la première, un piston pneumatique (5) se déplaçant avec la cloison mobile, une tige de commande axiale (8) se déplaçant vers le piston (5) en fonction d'une force d'entrée sélectivement exercée à l'encontre d'une force de rappel et orientée suivant une direction axiale d'actionnement (X+) pointant vers la chambre avant (3a), la force de rappel sollicitant la tige de commande (8) vers une position de retour et la force d'entrée sollicitant la tige de commande (8) vers une positionnement d'actionnement qui dépend de la force d'entrée, un clapet à trois voies (7) reliant la chambre arrière (3b) à la chambre avant (3a) lorsque la tige de commande (8) est en position de repos, et soumettant la chambre arrière (3b) à la seconde pression lorsqu'il est actionné par un déplacement de la tige de commande (8) vers sa position d'actionnement, et une tige de poussée (21), **caractérisé en ce qu**'il comprend un dispositif de fusible selon l'une quelconque des revendications 1 à 3.

## Claims

1. Fuse device for a pneumatic brake booster, **characterized in that** it comprises a hollow cylindrical first part (21) one end (25) of which has an inside diameter (d1) and a bowl-shaped second part (24) with a circular bottom equipped on its central external part with a roughly cylindrical stud (29) of an outside diameter (d2) slightly greater, within the tolerances, than the inside diameter (d1) of said end of said hollow cylindrical first part (21), so as to allow said hollow cylindrical first part (21) to be secured to said bowl-shaped second part (24) by forcibly inserting said stud (29) in said hollow end (25) of smaller diameter (d1), said bowl-shaped second part (24) having a circular external groove (30) whose purpose is to weaken the connection between said stud (29) and said bottom (26) of said bowl-shaped second part (24) when a pair of forces is applied to said fuse device, so as to allow said hollow cylindrical first part to detach from said bowl-shaped second part.

2. Fuse device for a booster according to Claim 1, **characterized in that** said hollow cylindrical first part (21) is intended to form the push rod of the pneumatic brake booster.

3. Fuse device for a pneumatic brake booster according to Claim 1 or 2, **characterized in that** said bowl-shaped second part (24) is intended to receive a reaction disk made of substantially incompressible materials placed at the bottom of the bowl, the reaction disk fitting the booster boost piston body.

4. Pneumatic brake booster comprising: a rigid casing (3), a moving partition sealingly defining a front chamber (3a) and a rear chamber (3b) inside the casing (3), the front chamber (3a) in operation being subjected to a first pressure and the rear chamber (3b) being connected selectively to the front chamber (3a) or subjected to a second pressure higher than the first, a pneumatic piston (5) moving with the moving partition, an axial control rod (8) moving toward the piston (5) as a function of an input force selectively exerted against the action of a return force and directed in an axial direction of actuation (X+) pointing toward the front chamber (3a), the return force urging the control rod (8) toward a return position and the input force urging the control rod (8) toward an actuating position which is dependent upon the input force, a three-way valve (7) connecting the rear chamber (3b) to the front chamber (3a) when the control rod (8) is in the rest position, and subjecting the rear chamber (3b) to the second pressure when it is actuated by movement of the control rod (8) toward its actuated position, and a push rod (21), **characterized in that** it comprises a fuse device according to any one of Claims 1 to 3.

## Patentansprüche

1. Sicherungsvorrichtung für einen pneumatischen Servomotor zur Bremsunterstützung, **dadurch gekennzeichnet, dass** sie einen ersten, hohlzylindrischen Teil (21), bei dem ein Ende (25) einen Innendurchmesser (d1) hat, und einen zweiten, schalenförmigen Teil (24) mit kreisförmigem Boden aufweist, der an seinem mittleren Außenabschnitt mit einem im Wesentlichen zylindrischen Zapfen (29) versehen ist, dessen Außendurchmesser (d2) bis auf Toleranzen geringfügig größer ist als der Innendurchmesser (d1) des Endes des ersten, hohlzylindrischen Teils (21), um die feste Verbindung des ersten, hohlzylindrischen Teils (21) mit dem zweiten, schalenförmigen Teil (24) durch Einsetzen des Zapfens (29) mit Kraft in das hohle Ende (25) mit kleinerem Durchmesser d1 zu ermöglichen, wobei der zweite, schalenförmige Teil (24) eine kreisförmige äußere Nut (30) aufweist, deren Aufgabe darin besteht, die Verbindung zwischen dem Zapfen (29) und dem Boden (26) des zweiten, schalenförmigen Teils (24) zu schwächen, wenn ein Kräftepaar auf die Sicherungsvorrichtung aufgebracht wird, um die Trennung des ersten, hohlzylindrischen Teils vom zweiten, schalenförmigen Teil zu ermöglichen.

2. Sicherungsvorrichtung für einen Servomotor nach Anspruch 1, **dadurch gekennzeichnet, dass** der erste, hohlzylindrische Teil (21) dazu vorgesehen ist, die Schubstange des pneumatischen Servomotors zur Bremsunterstützung zu bilden.

3. Sicherungsvorrichtung für einen pneumatischen Servomotor zur Bremsunterstützung nach Anspruch 1 oder 2, **dadurch gekennzeichnet, dass** der zweite, schalenförmige Teil (24) dazu vorgesehen ist, eine Reaktionsscheibe aus im Wesentlichen nicht zusammendrückbaren Materialien aufzunehmen, die am Boden der Schale angeordnet ist, wobei sich die Reaktionsscheibe an den Körper des Unterstützungskolbens des Servomotors anpasst.

4. Pneumatischer Servomotor zur Bremsunterstützung, mit einem starren Gehäuse (3), einer beweglichen Trennwand, die im Gehäuse (3) eine vordere Kammer (3a) und eine hintere Kammer (3b) in dichter Weise begrenzt, wobei die vordere Kammer (3a) im Betrieb einem ersten Druck ausgesetzt ist und die hintere Kammer (3b) wahlweise mit der vorderen Kammer (3a) verbunden oder einem zweiten Druck ausgesetzt ist, der höher ist als der erste, einem pneumatischen Kolben (5), der sich mit der beweglichen Trennwand verlagert, einer axialen Steuerstange (8), die sich in Abhängigkeit von einer Eingangskraft, die selektiv entgegen einer Rückstellkraft ausgeübt wird und gemäß einer axialen, zur vorderen Kammer (3a) gerichteten Betätigungsrichtung (X+) orientiert ist, zum Kolben (5) hin verlagert, wobei die Rückstellkraft die Steuerstange (8) in eine Rückstellposition beaufschlagt und die Eingangskraft die Steuerstange (8) in eine von der Eingangskraft abhängige Betätigungsposition beaufschlagt, einem Dreiwegeventil (7), das die hintere Kammer (3b) mit der vorderen Kammer (3a) verbindet, wenn sich die Steuerstange (8) in der Ruheposition befindet, und das die hintere Kammer (3b) dem zweiten Druck aussetzt, wenn es durch eine Verlagerung der Steuerstange (8) in ihre Betätigungsposition betätigt wird, und einer Schubstange (21), **dadurch gekennzeichnet, dass** er eine Sicherungsvorrichtung nach einem der Ansprüche 1 bis 3 aufweist.
